# EUROPEAN PATENT APPLICATION

(11) **EP 1 394 463 A2**
(43) Date of publication of application: **03.03.2004**
(21) Application number: 03019232.2
(22) Date of filing: 26.08.2003
(51) Int. Cl.: F16L 55/163

(54) **Composite pipe formed by a metallic pipe with inner lining of plastic material resistant to corroding agents, method for its manufacture, expanding tool to and use of said pipe**

(30) Priority: 26.08.2002 AR 0203203
(71) Applicant: Formar S.A., Buenos Aires C1282AFT (AR)
(72) Inventor: Trivelli, Enrique, C1282AFT - Buenos Aires (AR)
(74) Representative: COHAUSZ & FLORACK

(57) **Abstract**

Composite pipe formed by a metallic pipe with inner lining of plastic material resistant to corroding agents, the inner lining formed by a prefabricated plastic material lamina, curved to tubular shape to adapt it to the inner surface of the metallic pipe, its longitudinal edges abutting or separated by a small width joint. The curved lamina is placed inside the metallic pipe adhered to its inner surface, filling the joint between its longitudinal edges with a filler compatible with the plastic material of the lamina and the material of the metallic pipe, and resistant to the fluids to be conveyed through the composite pipe. Also, a method to manufacture said composite pipe, comprising placing into the metallic pipe a curved plastic material lamina, expanding same until adhering against the inner surface of the metallic pipe, by means of an adhesive, filling the joint between the edges of the curved plastic material lamina with a filler material. Also, a tool to carry out said expansion and the use of the composite pipe for conveying aggressive fluids.

## Description

This invention relates to a composite pipe formed by a metallic pipe with inner lining of plastic material, which is resistant to corroding agents due to the plastic material properties, but which also has resistance to internal and external pressure mainly defined by the metallic pipe characteristics.

This invention also relates to a method to manufacture said composite pipe.

Up to date the inner lining of metallic tubes, for example for steel pipelines, constitutes a labor-consuming and expensive work. This lining is generally carried out using nylon or epoxi paints curable at low temperatures, about 65°C, applying the powdered resin by means of electrostatic systems and heating the pipe up to about 200°C, or using phenolic epoxi curable at about 220°C.

The following problems arise when using this type of paints:
1. Surfaces have to be prepared by sand or shot blasting to attain a clean surface quality to grade 2 1/2 of the Swedish Norm for steel cleaning. This means almost bright steel with a surface roughness which improves paint sticking.
2. Lining application is carried out in one or more layers according to the product used, curing each layer, to obtain a thickness between 250 and 350 microns. With greater thickness the lining becomes brittle and sensible to deformations due to the pipe handling, especially bending, as the pipes are 11 to 13-m long.
3. Generally, pipes are stored in stowages until their use. The adequate tools to move them or to load them from the stowages are not always available, and it is common practice to use a lever at one end to raise the pipe to pass a sling underneath, or to move them. This may cause damage to the lining coat, leaving the steel bare or sensibly reducing the thickness of the protective coat.
4. In some cases, the fluid to be conveyed through the pipes carries solid particulates in suspension, and after a time this may erode the lining coat, drastically reducing the lining duration, because of its small thickness.

All these difficulties inclined users to prefer other types of pipes manufactured from materials with better chemical resistance and which show safer results, e.g. thermoset resins reinforced with glass fibers.

These pipes can be joined only by means of screwed joints or flanges. As fluids are conveyed with pressure between 20 and 140 bar, the wall thickness necessary for this type of materials make their cost equal or greater than a coated steel pipe. Also, these materials do not have good resistance to collapse due to external pressure or flectional fatigue, because resistance to the internal pressure is attained by crossed glass fiber meshing fixed with resin..

Other plastic materials resistant to corroding agents are polyalkylenes, which have the following temperature limits:
1. Up to 70°C of service: polyethylene
2. Up to 100°C of service: polypropylene
3. Up to 140°C of service: thermocured resins reinforced with glass fibers.

Pipes made of these plastic materials do not have enough resistance to internal pressure in standard thickness. In most cases their resistance to internal pressure is not more than 10 bar.

This problem could be solved by means of an outer metallic casing, but these plastic pipes with metallic outer reinforcement, e.g. of wire netting or helicoidal wire, are not adequate for long pipelines (several kilometers) made up of joined sections 11 to 13 m-long. This can only be practically attained using metallic pipes, seamed or seamless.

Therefore, the problem was to combine a prefabricated pipe of plastic material with a thickness not greater than the necessary to resist erosion or attacks caused by corrosive agents, with a metallic pipe, to obtain a composite pipe with good resistance to corrosion and pickling, chemical and/or mechanical, attained by the plastic material. Also, the pipe should have resistance to internal pressure as well as compression stress, this attained by the metallic pipe.

Another problem was assembling a pipeline made of metallic pipes with inner lining of plastic material, by means of sleeves or packing rings located in the joint area, and obtaining a completely smooth inner surface.

It has already been proposed to manufacture these composite pipes by inserting a prefabricated pipe of plastic material into a metallic pipe, loosely enough to allow the plastic pipe to be inserted easily, then filling up the space with an adequate material. However, if metallic pipes have a large diameter it is often difficult to obtain plastic material pipes with a diameter large enough, or the cost of the necessary tools to extrude this large diameter plastic material pipes is to expensive that advantages of this technique are offset.

This problem is solved by the present invention by means of a composite pipe formed by a metallic pipe with inner lining, particularly of plastic material, resistant to corroding agents, wherein said inner lining is formed by a prefabricated plastic material lamina, tubular-shaped to adapt it to the inner surface of the metallic pipe, having its longitudinal edges abutting each other or separated by a small width joint. Said curved lamina is located inside the metallic pipe adhered to its inner surface, the joint between the longitudinal edges is filled by a filler compatible with the plastic material of the lamina as well as the material of the metallic pipe, and which is resistant to fluids to be conveyed through the composite pipe.

The advantage offered by this technique is that to manufacture a plastic material lamina, for example plane, is less expensive than extrusion for a pipe of great diameter, for example by calendering, with sufficient width to cover the inner perimeter of metallic pipes of great diameter, for example 1 meter or more, and in the most adequate thickness. These plane laminas can be curved using conventional techniques.

A suitable filler is constituted by a composition of cured synthetic resin, or by a welding seam.

The present invention also relates to a method to manufacture said composite pipe with inner lining of plastic material, as well as to an expanding tool to carry out the invention method.

In a first embodiment of the invention, the manufacturing method comprises the preparation of a flexible plastic material lamina having a width equal to or slightly less than the inner perimeter of the metallic pipe, curving said plastic material lamina crosswise with a curvature radius less than the inner curvature radius of the metallic pipe, abutting or overlapping its longitudinal edges, inserting this plastic material curved lamina into the metallic pipe, and expanding it until its outer surface adheres to the inner surface of the metallic pipe, filling the remaining joint between longitudinal edges of the plastic material curved lamina with a filler.

In another embodiment of the present invention method, the filler is formed with a composition of synthetic resin in fluid state, filling the joint with said composition and left to solidify.

In another embodiment of the present invention, the filler is formed using a fusible plastic material, or at least one that can be thermally fused and able to weld to the curved plastic material lamina.

In another embodiment of the invention, the curved plastic material lamina is formed by a plastic material pipe with a longitudinal slit. In this case, the plastic material pipe can be prepared by extrusion and blown, this method being simpler and less costly than the simple extrusion of a relatively rigid plastic material pipe.

For metallic pipes of inner diameters sufficiently large to allow insertion of a tool, which is the most frequent application of the present invention, although not limited to it, an adhesive layer, compatible with the plastic and metallic materials, is applied on the outer surface of the curved lamina; the curved plastic material lamina is compressed so that its longitudinal edges abut or overlap; the plastic material curved lamina thus compressed is inserted into the metallic pipe, its longitudinal edges located in the lowest position of the metallic pipe periphery; an expanding tool is inserted into the plastic material curved lamina, to exert radial pressure on its inner surface in order to expand it against the inner surface of the metallic pipe, forming a joint between the edges of the plastic material curved lamina; a filler material is applied into said joint as the expanding tool advances inside the plastic pipe.

If the filler material is a viscous fluid composition, it is applied by means of an injecting tool. As this type of filler material applied inside the joint of the plastic material curved lamina usually forms an irregular seam, the invention foresees to smooth said seam using smoothing rollers made of elastomeric material.

If the filler is made of a fusible material, a rod made of said material is advanced together with the expanding tool, heating it by any adequate means while pressing it against the edges of the plastic material curved lamina, applying enough pressure to level the resulting seam with the thickness of the plastic material curved lamina. The welding rod has to be made of a material compatible with the plastic material of the curved lamina. Preferably, it is of a similar material of the plastic material curved lamina.

The present invention also relates to an expanding tool, which includes a cart with less height and width than the inner diameter of the plastic pipe. The cart is provided with wheels which run over the lower portion of the inner surface of the plastic material curved lamina, and is joined to a longitudinal shaft protruding from one of the ends of the metallic pipe to move the cart; a plurality of rollers of radial expansion evenly distributed, which are mounted through respective unfolding supports and expanding elements on the cart or the shaft.

This tool allows the fast expansion of the plastic material lamina by means of the rollers expanding during the tool movement through the pipe.

The cylinders unfolding supports are constituted by respective tilting arms with an expanding roller at one end, and hinged to the cart or shaft at the other end. Also, the expanding elements can be formed by a spiral spring. Said expanding element can also by a hydraulic cylinder.

The expanding cylinders preferably consist of two pairs of cylinders, each pair arranged, respectively, vertically and horizontally.

In order to guide the tool inside the plastic material curved lamina and ensure that the longitudinal edges abut the inner surface of the metallic pipe, the lower roller has a central peripheral rim which, during the cart movement, engages in the joint between said longitudinal edges, to serve as a guide.

Also, the invention foresees that an injector of fluid filler material be located underneath the cart, parallel to the longitudinal joint of the plastic material curved lamina. This ensures expansion of the plastic material curved lamina and application of the filler seam in one operation stage.

As the filler seam may have different levels due to the adhesive viscosity, the invention provides a smoothing roller on the cart, located at the back of the filler material injector as seen in the direction of advance of the cart.

According to other embodiment of the invention, when the filler seam is applied as welding with fusible or melting plastic material, the tool has a welding device and a device for feeding welding rods, instead of the injector.

The invention method will be further described with reference to embodiments shown in the annex drawings, in which:
Figure 1 shows a longitudinal section of a metallic pipe with inner lining of plastic material lamina, as well as an expanding tool.
Figure 2 is a cross section of the metallic pipe with the plastic material lining, immediately after being inserted into the metallic pipe, not yet expanded.
Figure 3 is a side view of an arrangement to form a plane plastic material lamina to obtain a curved lamina, and to insert it into the metallic pipe.
Figure 4 is a cross section of the metallic pipe with the inner lining, after expansion with the expanding tool shown in Figure 1.

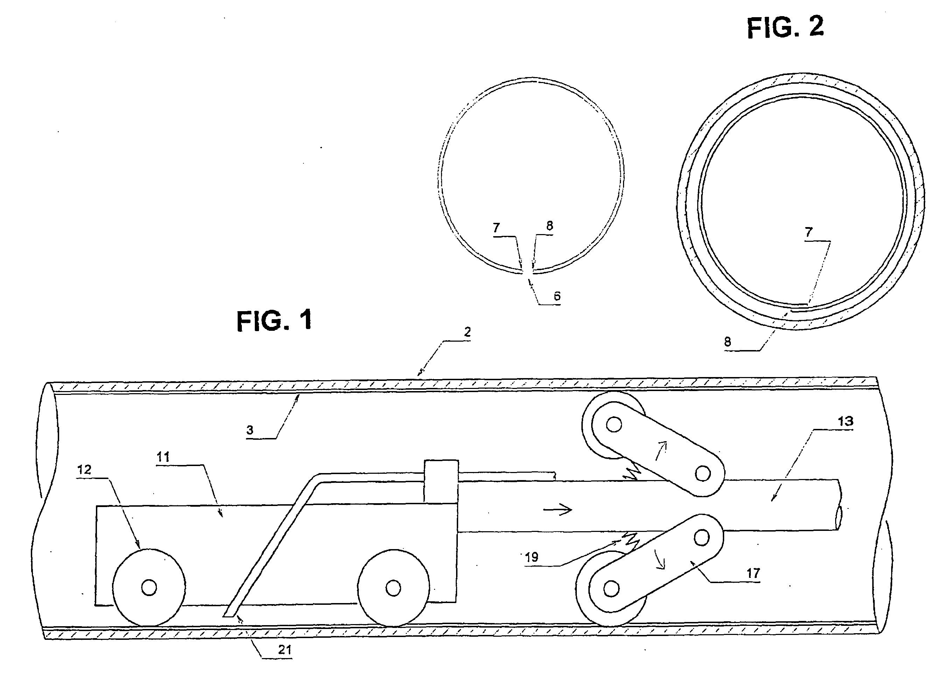

As shown in figure 1, the metallic pipe with inner lining of plastic material 1, resistant to corroding fluids, has an outer metallic pipe 2, for example of steel or bronze, or other metal, preferably of standard dimensions, for example 6 to 13-meter long. A plastic material lining 3 is placed inside the metallic pipe 2.

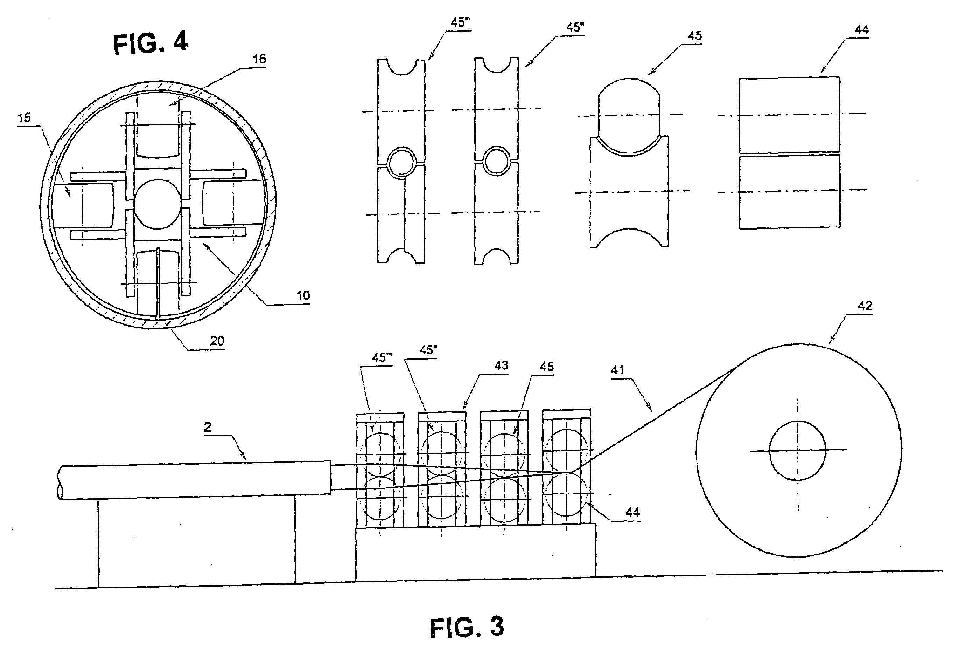

Figure 3 shows an arrangement which allows manufacturing of the plastic material curved lamina from a plastic plane band 41, coiled in a coil 42.

Between the plastic band coil 42 and the end of the metallic pipe 2, which is supported on a workbench (not shown), is located a forming train 43 which has several pairs of cylinders, a first pair of opposite drawing cylinders 44, 44', next to coil 42, which compress the band 41 uncoiling it, and pairs of forming cylinders 45, 45" 45"', which cylinders first curve the plastic band shaping it as a slit cylindrical pipe, which is directly inserted into the metallic pipe 2 by impulsion of the forming train 43.

The forming train can also have adhesive applying means and compressing cylinders located in the last pair of cylinders, to compress the plastic curved lamina to insert it into the metallic pipe.

In other embodiment of the invention, once determined the metallic pipe, a plastic material pipe 3 with an outer diameter similar to the inner diameter of the metallic pipe 2 is selected. Before inserting the plastic material pipe 3 into the metallic pipe 2, the plastic material pipe is longitudinally cut in the generatrix direction, this longitudinal cut being 2 to 5 mm-wide. Thus a longitudinally-slit plastic material pipe is obtained, similar to the curved lamina of the former example. Next, a thin coat of adhesive, compatible with the plastic material as well as the metallic pipe material, is applied on the outer surface of the slit plastic material pipe. Suitably, the adhesive can be an acrylic adhesive.

In order to prevent that the adhesive coat applied on the slit plastic material pipe hinder its insertion into the metallic pipe, unevenly spreading between the slit plastic material pipe and the metallic pipe, the diameter of the slit plastic material pipe 3 is reduced joining the longitudinal edges of the slit 6 (figure 3) or overlapping these opposite longitudinal edges 7, 8 of slit 6, as shown in figure 2.

In this state, the slit plastic material pipe 3 is inserted into the metallic pipe 2, then allowing the plastic material pipe to expand to its original configuration because of its elasticity.

The metallic pipe 2 with the slit plastic material pipe 3 inserted into it is supported on a workbench (not shown in detail) and an expanding tool 10 is inserted into the slit plastic material pipe. The expanding tool 10 comprises a cart 11 with several wheels 12 and a longitudinal shaft 13 longer than the pipe. Cart 11 can move inside the slit plastic material pipe with the wheels 12 running over the lower portion of the pipe, in particular at both sides of slit 6.

Shaft 13 is fixed to cart 11 so that it is placed approximately axially centered with the axial longitudinal axis of the pipe.

Expanding tool 10 also includes at least to pairs of expanding rollers 15, 15'; 16, 16', rotatorily mounted on the free ends of the tilting arms 17, 17'. At the opposite end, these arms are hinged on shaft 13, as shown in figure 1 (or on cart 11, not shown) by means of corresponding hinges 18, 18'.

The length of the tilting arms 17, 17' is such to define an acute angle with the axial axis of shaft 13, being the rollers 15, 15', 16, 16' pressed against the inner surface of the slit plastic material pipe.

Respective expansion members 19, 19' have been provided between shaft 13 (or cart 11) and the tilting arms 17, 17', formed by spiral springs. These expansion members can also be constituted by hydraulic cylinders.

Therefore, the expansion members 19, 19' expand the tilting arms 17, 17' and the corresponding cylinders, which in turn expand the slit plastic material pipe against the inner surface of the metallic pipe.

In order to guide longitudinally the expanding tool 10 inside the slit plastic material pipe and to eventually prevent the longitudinal edges of the slit to overlap accidentally, the lower roller has been provided with a central peripheral rim 20, which engages in slit 6 to serve as a guide, having approximately the same thickness than the slit 6.

Also, cart 11 has in its lower part, aligned with slit 6, an injector of sealing filler 21, connected through a pipe to a source of filler material which is a viscous fluid under pressure (not shown in detail). A nozzle 22 of injector 21 is directly inserted in slit 6, or it is guided in the slit by means of a skate (not shown). This nozzle injects the filler material into slit 6. Instead of injector 21, the cart may have a welding device for applying fused plastic material and the corresponding feeder for welding material rods.

The expanding tool is inserted into one end of the pipe so that the cart 11 is placed at the opposite protruding end of the pipe, and rollers 15, 15', 16, 16' pressed against the slit plastic material pipe at the area of the corresponding end of the metallic pipe. Next, the cart is moved inside the pipe, the rollers 15, 15', 16, 16' exert pressure against the inner surface of the slit plastic material pipe, which is then adhered by means of the adhesive layer to the inner surface of the metallic pipe.

If the joint is made using a fluid sealer, cart 11 will also have a smoothing cylinder 25, at the back of injector 21 (seen in the direction of advance). The sealer is an elastomeric material, for example silicone rubber or Teflon, which smoothes the filler material seam injected into slit 6, to attain a curvature identical to the rest of the inner surface of the plastic material pipe.

Curing of the adhesive material applied between the plastic material pipe and the metallic pipe, as well as the fluid filler material applied into slit 6 is substantially carried out at room temperature.

If the period for curing is relatively long, it is possible to move cart 11 and expanding rollers to-and-fro inside the plastic pipe until the adhesive are set.

Finally, the expanding tool is removed, the protruding ends of the plastic tube are cut, and the ends of the metallic pipe with its inner lining of plastic material are worked.

### Example of application

A pipeline was build using composite pipes according to the present invention, to convey oil, comparing its behavior with a reference pipeline built by conventional techniques.

The reference pipeline had a length of 1800 meters, and was intended to convey a mixture of oil and formation water on an elevation about 100 meters over the level of a pumping station.

The steel pipe had a diameter of 30 cm, and a wall thickness of 6.35 mm. It was lined with nylon 11 with a 250-□m thickness. Before start-up, the lining was damaged trying to remove stones and boulders from the pipeline using a pipe scraper (pig).

After about four months of service, the pipeline was perforated due to local corrosion at the elevation ridge.

The area of maximum elevation suffered severe corrosion in those points where the lining had been damaged. Corrosion was less evident in other lower places. The pipeline conveyed a flow of 6000 m³ a-day under a working pressure of 30 bar and a temperature of 30°C.

### Preliminary examination of pipeline samples

Samples of the reference piping were examined. Microscopic evaluation of the nylon 11 lining in the samples showed good adhesion to the metallic substrate. Upon separation of the lining from the steel, the steel surface was free from contamination or corrosion, having a well-defined shot blasting profile. Cross section of the lining showed about 5% porosity in closed cells with pores up to 25 □m-diameter.

The lining underwent mechanical damage, which caused scratchs on the lining which reached the metal. One 10 mm-long/3 mm-wide scratch on the lining was examined using stereoscopic magnifying glass. Upon removal of the lining, it was found that a circular corrosion hole of 10 mm in diameter and 3 mm in depth had been formed under it. The base of the hole was rounded with stepped walls.

The pipe sample was cut in the middle of the corroded hole and surrounding steel, it was assembled and polished in a way that allowed the steel to be examined in the interface with the corrosion product in the hole. It could be observed that corrosion advanced as deep and penetrating holes, almost as cracks, which separated as steel needles in the corrosion hole.

The surface was subject to a treatment with natal solution (nitric acid and alcohol), and examined under metallographer it showed that the corrosion process selectively destroyed the cementite phase of steel.

The corrosion process comprised an attack to the cementite particle and formation of a fracture through the ferrite until reaching the next cementite particle. The ferritic phase, which constitutes the major part of steel, has been deposited undamaged in the corrosion hole.

This corrosion process explains the speed of penetration in the pipe wall.

### Comparative Example

Composite pipes with a thickness of the inner plastic material pipe of 5 mm according to the present invention were used under similar conditions.

After 6 months of similar service, no perforation was observed. After cutting, some of the pipes showed scratchs on the plastic material, which were probably the result of abrasion caused by sand drawn by the mixture of oil and water, but none of them were deep enough to reach the steel pipe. When the plastic material was removed, no damaged could be observed on the steel pipe.

## Claims

1. A composite pipe formed by a metallic pipe with inner lining of plastic material resistant to corroding agents, **characterized in that** the inner lining is constituted by a prefabricated plastic material lamina, curved to a tubular shape to adapt it to the inner surface of the metallic pipe, its longitudinal edges abutting or separated by a small width joint; the curved lamina is placed into the metallic pipe adhered to its inner surface, the joint between said longitudinal edges is filled by means of a filler compatible with the plastic material of the lamina and the material of the metallic pipe, and resistant to the fluids to be conveyed through the composite pipe.

2. A method to manufacture a composite pipe formed by a metallic pipe with inner lining of plastic material according to claim 1, said method comprising the preparation of a flexible plastic material lamina with a width equal to or slightly less than the inner perimeter of the metallic pipe, transversally curved with respect to its width, with a curvature radius less than the curvature radius of the metallic pipe, its longitudinal edges abutting or overlapping; inserting the curved plastic material lamina into the metallic pipe and expanding it until the outer surface of the curved plastic material lamina is adhered to the inner surface of the metallic pipe, filling the joint between longitudinal edges of the curved plastic material lamina with a filler.

3. The method according to claim 2, **characterized in that** the curved plastic material lamina is prepared from a plane plastic material sheet, and coiled to a substantially cylindrical shape.

4. The method according to claim 1, **characterized in that** the curved plastic material lamina is prepared longitudinally slitting a plastic material pipe following one of its generatrix.

5. The method of claim 2, **characterized in that** the filler material is a curable composition applied in fluid state, and left to cure after application.

6. The method of claim 5, **characterized in that** the filler material seam applied at the joint of the curved plastic material lamina is smoothed by means of a smoothing roller.

7. The method of claim 2, **characterized in that** the filler material is a fusible plastic material, compatible with the material of the curved plastic material lamina, being heated to melting point and pressed against the edges of the plastic material lamina until welding of same, leaving the welding seam to cool until solidifying.

8. The method of claim 2, **characterized in that** the curved plastic material lamina is formed from a plane plastic band, uncoiled from a plastic band coil and transversally curved until obtaining a circular slit pipe.

9. An expanding tool to carry out the method according to any of claims 2 thru 8, **characterized in that** said expanding tool comprising a cart with less height and width than the inner diameter of the curved plastic material lamina, provided with wheels that run over the lower portion of the inner surface of the plastic material pipe; the cart is connected to a longitudinal shaft protruding from one of the pipe's ends, which allows the cart movement; a number of radial expansion rollers evenly distributed, mounted through respective unfolding supports, and expanding members on the cart or the shaft.

10. The expanding tool of claim 9, **characterized in that** the cylinders unfolding supports are constituted by respective tilting arms with an expanding roller at one end, and hinged to the cart or shaft at the opposite end, the expanding members being a spiral spring.

11. The tool of claim 10, **characterized in that** the expanding member is a hydraulic cylinder.

12. The tool according to any of claims 9 to 11, **characterized in that** it comprises at least two pairs of expanding cylinders, each pair arranged vertically and horizontally, respectively.

13. The tool according to claim 12, **characterized in that** the lower roller has a peripheral central rim which engages in the slit of the plastic material pipe, to serve as a guide.

14. The tool according to any of claims 9 to 13, **characterized in that** the cart has, in its lower part, an injector of fluid filler material aligned with the longitudinal slit of the slit plastic material pipe.

15. The tool of claim 14, **characterized in that** the cart has at the back of the filler material injector, seen in the direction of movement of the cart, a smoothing cylinder to smooth the resulting filler seam.

16. The tool according to any of claims 9 to 13, **characterized in that** the cart has, in its lower part, a welding arrangement for applying fused plastic material and a feeder for plastic material welding rods.

17. Use of a composite pipe according to claim 1 and/or manufactured by the method of claims 2 to 8, for conveying chemical and/or mechanically aggressive fluids.
